# EUROPÄISCHE PATENTSCHRIFT

(11) **EP 1 633 613 B1**
(45) Veröffentlichungstag und Bekanntmachung des Hinweises auf die Patenterteilung: **24.01.2007**
(21) Anmeldenummer: 04739379.8
(22) Anmeldetag: 27.05.2004
(51) Int. Cl.: B60T 13/26, B60T 13/36, B60T 15/08, B60T 15/18

(54) **BREMSVORRICHTUNG FÜR EIN SCHIENENFAHRZEUG**
BRAKING DEVICE FOR A RAIL VEHICLE
DISPOSITIF DE FREINAGE POUR UN VEHICULE SUR RAIL

(30) Priorität: 28.05.2003 DE 10324438
(43) Veröffentlichungstag der Anmeldung: 15.03.2006
(73) Patentinhaber: KNORR-BREMSE Systeme für Schienenfahrzeuge GmbH, 80809 München (DE)
(72) Erfinder: HUBER, Jürgen, 81549 München (DE); GAAG, Andreas, 92339 Beilngries (DE)
(74) Vertreter: Schönmann, Kurt
(86) Internationale Anmeldenummer: PCT/EP2004/005689
(87) Internationale Veröffentlichungsnummer: WO 2004/106132

(56) Entgegenhaltungen:
- US-A- 4 003 606
- US-A- 5 393 130
- US-B1- 6 312 060

## Beschreibung

### Stand der Technik

Die Erfindung betrifft eine Bremsvorrichtung für ein Schienenfahrzeug, gemäß der Gattung von Anspruch 1.

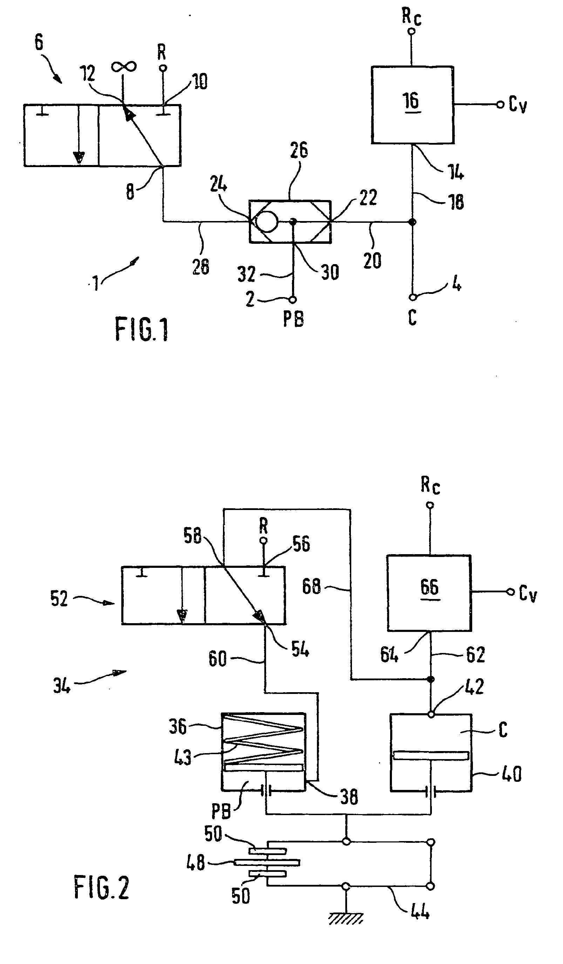

Ein Funktionsschaubild einer solchen, aus dem Stand der Technik, wie zum Beispiel der US 6,312,060 B1 bekannten Bremsvorrichtung eines Drehgestells ist in Fig.1 dargestellt. Die bekannte Bremsvorrichtung 1 beinhaltet einen aus Maßstabsgründen nicht dargestellten Federspeicherzylinder mit einem Druckanschluss 2, an welchem ein Federspeicherdruck PB anliegt, einen nicht dargestellten Betriebsbremszylinder mit einem Druckanschluss 4, welcher mit einem Betriebsbremsdruck C beaufschlagbar ist, sowie eine Steuerventilanordnung 6. Die Steuerventilanordnung wird durch ein 3/2-Wegemagnetventil 6 mit drei Anschlüssen 8, 10, 12 und zwei Schaltstellungen gebildet, wobei der erste, mit dem Druckanschluss 2 des Federspeicherzylinders in Verbindung stehende Anschluß 8 mit dem zweiten, mit einem von einem Druckreservoir abgeleiteten Druck R beaufschlagbaren Anschluß 10 oder mit dem dritten Anschluß verbindbar ist, welcher ein mit der Atmosphäre verbundener Entlüftungsanschluß 12 ist. Der Druckanschluss 4 des Betriebsbremszylinders steht mit einem Druckausgang 14 einer Relaisventilanordnung 16 in Verbindung, welche in Abhängigkeit eines Steuerdrucks Cv aus einem von einem Druckreservoir abgeleiteten Reservoirdruck Rc den Betriebsbremsdruck C erzeugt. Von einer den Druckausgang 14 des Relaisventils 16 mit dem Druckanschluss 4 des Betriebsbremszylinders verbindenden Leitung 18 zweigt ein Leitungsabschnitt 20 ab, welcher in einen von zwei Eingängen 22, 24 eines Wechselventils 26 mündet. Der andere Eingang 24 des Wechselventils 26 steht über eine Leitung 28 mit dem ersten Anschluß 8 des 3/2-Wegeventils 6 in Verbindung, während der Ausgang 30 an den Druckanschluss 2 des Federspeicherzylinders über eine Leitung 32 angeschlossen ist. Das Wechselventil 26 ist in bekannter Weise ausgebildet, um den größeren der an seinen beiden Eingängen 22, 24 anstehenden Drücke an seinen Ausgang 30 zu schalten. Der Federspeicherzylinder ist ein passiver Bremszylinder, welcher durch Drucksteigerung gelöst und durch Drucksenken zugespannt wird, während der Betriebsbremszylinder ein aktiver Bremszylinder ist, bei welchem eine Drucksteigerung das Zuspannen und eine Drucksenkung das Lösen der Bremse bewirkt. Der Betriebsbremszylinder und der Federspeicherzylinder wirken beide auf eine gemeinsame aus Maßstabsgründen nicht gezeigte Bremsmechanik, beispielsweise eine Bremszange, welche an eine Bremsscheibe anpressbare Bremsbeläge trägt.

Ausgehend von einem Zustand, in welchem sowohl der Betriebsbremszylinder als auch der Federspeicherzylinder gelöst ist, soll nun ein mit einer derartigen Bremsvorrichtung 1 ausgestattetes Schienenfahrzeug gebremst werden. Damit der Federspeicherzylinder und der Betriebsbremszylinder zunächst gelöst sind, muss das 3/2-Wegeventil 6 so geschaltet sein, dass der erste Anschluß 8 mit dem zweiten Anschluß 10 verbunden und der dritte Anschluß 12 gesperrt ist. Dann steht in der Leitung 28 der Lösedruck R an, während das Relaisventil 16 die ihr nachgeschaltete Leitung 18 entlüftet, so dass der Betriebsbremsdruck C niedrig ist. Infolgedessen steuert das einerseits durch den niedrigen Betriebsbremsdruck C und andererseits durch den hohen Reservoirdruck R belastete Wechselventil 26 Letzeren an den Federspeicherzylinder als Lösedruck PB durch, um die Federspeicherbremse gelöst zu halten.

Soll ausgehend von diesem Zustand das Schienenfahrzeug gebremst und sicher abgestellt werden, wird durch entsprechende Ansteuerung des Relaisventils 16 der Betriebsbremsdruck C erhöht, der Betriebsbremszylinder zugespannt und das Schienenfahrzeug zum Halten gebracht. Das 3/2-Wegeventil 6 wird in die in Fig.1 gezeigte Stellung geschaltet, in welcher der erste Anschluß 8 mit dem Entlüftungsanschluß 12 verbunden ist. Dies hat zur Folge, dass der Druck in der Leitung 28 abfällt. Infolgedessen setzt sich am Wechselventil 26 der nun durch entsprechende Ansteuerung des Relaisventils 16 erhöhte Betriebsbremsdruck C durch, welcher über die Leitung 32 zum Federspeicherzylinder gelangt und ihn in Lösestellung hält, während er den Betriebsbremszylinder weiter zuspannt und dadurch das Schienenfahrzeug am Abrollen hindert. Folglich sorgt das Wechselventil 26 dafür, dass die Bremsmechanik stets entweder durch den Betriebsbremszylinder oder durch den Federspeicherzylinder betätigt wird, aber niemals von beiden gleichzeitig, da ansonsten die eine begrenzte Dauerfestigkeit aufweisende Bremsmechanik überlastet werden würde. Insbesondere bei geringen Druckdifferenzen an den beiden Eingängen 22, 24 arbeiten solche Wechselventile 26 jedoch oft unzuverlässig.

Der vorliegenden Erfindung liegt demgegenüber die Aufgabe zugrunde, eine Bremsvorrichtung der eingangs erwähnten Art derart weiterzubilden, dass sie zuverlässiger arbeitet und kostengünstiger herzustellen ist.

Erfindungsgemäß wird diese Aufgabe durch die kennzeichnenden Merkmale von Anspruch 1 gelöst.

### Vorteile der Erfindung

Indem der dritte Anschluß der Steuerventilanordnung mit dem Druckanschluss des Betriebsbremszylinders in Verbindung steht, kann auf das Wechselventil vollständig verzichtet werden. Der Verzicht auf das Wechselventil sorgt einerseits vor dem Hintergrund der im Schienenfahrzeugbereich hohen Stückzahlen von Drehgestellbremsen für eine merkliche Reduzierung der Fertigungkosten und zum andern für eine Steigerung der Zuverlässigkeit. Die Funktion des Wechselventils wird nun von der ohnehin vorhandenen Steuerventilanordnung im Sinne einer Doppelfunktion übernommen, so dass sich die Anzahl der Bauteile der Bremsvorrichtung vorteilhaft reduziert.

Die genaue Funktionsweise der erfindungsgemäßen Bremsvorrichtung wird am besten anhand der nun folgenden Beschreibung eines bevorzugten Ausführungsbeispiels deutlich, welches in Fig.2 dargestellt ist.

### Beschreibung des Ausführungsbeispiels

Die in Fig.2 gezeigte Bremsvorrichtung 34 dient zum Abbremsen eines Drehgestells eines Schienenfahrzeugs und beinhaltet einen Federspeicherzylinder 36 mit einem Druckanschluss 38, an welchen ein Federspeicherdruck PB anlegbar ist, sowie einen Betriebsbremszylinder 40 mit einem Druckanschluss 42, welcher mit einem Betriebsbremsdruck C beaufschlagbar ist.

Der Federspeicherzylinder 36 ist beispielsweise ein passiver Bremszylinder, welcher durch Drucksteigerung gegen die Wirkung seiner Speicherfeder 43 gelöst und durch Drucksenken zugespannt wird. Hingegen ist der Betriebsbremszylinder 40 vorzugsweise ein aktiver Bremszylinder, bei welchem eine Drucksteigerung das Zuspannen und eine Drucksenkung das Lösen der Bremse bewirkt. Alternativ kann der Federspeicherzylinder 40 ein aktiver Bremszylinder und der Betriebsbremszylinder 36 ein passiver Bremszylinder sein. Entscheidend ist, dass die beiden Bremszylinder bei Druckänderungen gegenläufig arbeiten. Der Betriebsbremszylinder 40 und der Federspeicherzylinder 36 wirken beide auf eine gemeinsame Bremsmechanik, beispielsweise eine Bremszange 44, welche an eine Bremsscheibe 48 anpressbare Bremsbeläge 50 trägt.

Eine Steuerventilanordnung wird vorzugsweise durch ein 3/2-Wegemagnetventil 52 mit drei Anschlüssen 54, 56, 58 und zwei Schaltstellungen gebildet, wobei der erste, mit dem Druckanschluss 38 des Federspeicherzylinders 36 über eine Leitung 60 in Verbindung stehender Anschluß 54 mit dem zweiten, mit einem von einem dem Federspeicherzylinder 36 zugeordneten Druckreservoir abgeleiteten Druck R beaufschlagbaren Anschluß 56 oder mit dem dritten Anschluß 58 verbindbar ist. Das 3/2-Wegeventil 52 ist außerdem vorzugsweise ein von einer nicht dargestellten Steuereinrichtung elektrisch angesteuertes Magnetventil. Alternativ können jegliche weitere Ventile eingesetzt werden, welche die gleiche Funktion erfüllen, beispielsweise auch ein Impulsventil.

Der Druckanschluss 42 des Betriebsbremszylinders 40 steht über eine weitere Leitung 62 mit einem Druckausgang 64 einer Relaisventilanordnung 66 in Verbindung, die in Abhängigkeit eines Steuerdrucks Cv aus einem von einem Druckreservoir abgeleiteten Reservoirdruck Rc den Betriebsbremsdruck C erzeugt. Von dieser Leitung 62 zweigt eine weitere Leitung 68 ab, welche an den dritten Anschluß 58 des 3/2-Wegeventils 52 angeschlossen ist. Anstatt von der Relaisventilanordnung 66 könnte der Betriebsbremsdruck C auch durch ein beliebiges Steuerventil, z.B. durch ein Lastbremsventil, durch eine Kombination mehrerer solcher Ventile oder auch direkt aus dem Reservoirdruck Rc abgeleitet werden.

Ausgehend vom Fahrzustand soll nun das Schienenfahrzeug abgebremst und geparkt werden. Im Fahrzustand müssen sowohl der Betriebsbremszylinder 40 als auch der Federspeicherzylinder 36 gelöst sein, d.h., dass das 3/2-Wegeventil 52 so geschaltet ist, dass der erste Anschluß 54 mit dem zweiten Anschluß 56 verbunden und der dritte Anschluß 58 gesperrt ist. Dann steht in der zum Federspeicherzylinder 36 führenden Leitung 60 der vom Reservoir des Federspeicherzylinders 36 abgeleitete Druck R als Lösedruck an und hält ihn gegen die Wirkung der Speicherfeder in Lösestellung. Gleichzeitig entlüftet die Relaisventilanordnung 66 die ihr nachgeschaltete Leitung 62, so dass der Betriebsbremsdruck C so niedrig ist, dass der Betriebsbremszylinder 40 nicht zugespannt werden kann. Da der dritte Anschluß 58 des 3/2-Wegeventils 52 gesperrt ist, kann dieser niedrige Betriebsbremsdruck C jedoch nicht zum Federspeicherzylinder 36 durchgeschaltet werden, welcher daher weiterhin in Lösestellung verbleibt.

Soll ausgehend vom Fahrzustand nun eine Bremsung durch Aktivierung der Betriebsbremse eingeleitet werden, so wird das 3/2-Wegeventil 52 in die in Fig.2 gezeigte Schaltstellung gesteuert, in welcher der erste Anschluß 54 mit dem dritten Anschluß 58 verbunden und der zweite Abschluß 56 gesperrt ist. Dies hat zur Folge, dass der durch entsprechende Ansteuerung der Relaisventilanordnung 66 erhöhte Betriebsbremsdruck C über die Leitung 68 am dritten Anschluß 58 des 3/2-Wegeventils 52 ansteht, durch dieses durchgesteuert und über die Leitung 60 zum Federspeicherzylinder 36 gelangt, um ihn in Lösestellung zu halten. Weiterhin bewirkt die Erhöhung des Betriebsbremsdrucks C, dass der Betriebsbremszylinder 40 zuspannt und dadurch das Schienenfahrzeug zum Halten gebracht wird. Der zugespannte Betriebsbremszylinder 40 bildet dann zugleich die Parkbremse.

Falls nun nach einiger Zeit der Betriebsbremsdruck C aufgrund von teilweise unvermeidbaren Leckagen sinkt, wird die Betriebsbremszylinder 40 zwar gelöst, jedoch spannt gleichzeitig der Federspeicherzylinder 36 zu, weil dieser über die Leitung 68, das gemäß Fig.2 geschaltete 3/2-Wegeventil 52 und die Leitung 60 durch den Betriebsbremsdruck C beaufschlagt ist, welcher dann nicht mehr in der Lage ist, den Federspeicherzylinder 36 gegen die Wirkung der Speicherfeder gelöst zu halten. Folglich übernimmt dann der Federspeicherzylinder 36 die Funktion der Parkbremse, wobei die Parkbremskraft durch die Speicherfeder 43 aufgebracht wird. Durch die beschriebene Schaltung wird außerdem weiterhin sichergestellt, dass nur entweder der Federspeicherzylinder 36 oder der Betriebsbremszylinder 40 die Bremszange 44 betätigt.

### Bezugszahlenliste

- 1: Bremsvorrichtung
- 2: Druckanschluss
- 4: Druckanschluss
- 6: Steuerventilanordnung
- 8: Anschluss
- 10: Anschluss
- 12: Anschluss
- 14: Druckanschluss
- 16: Relaisventil
- 18: Leitung
- 20: Leitungsabschnitt
- 22: Eingang
- 24: Eingang
- 26: Wechselventil
- 28: Leitung
- 30: Ausgang
- 32: Leitung
- 34: Bremsvorrichtung
- 36: Federspeicherzylinder
- 38: Druckanschluss
- 40: Betriebsbremszylinder
- 42: Druckanschluss
- 43: Speicherfeder
- 44: Bremszange
- 48: Bremsscheibe
- 50: Bremsbeläge
- 52: Steuerventilanordnung
- 54: Anschluss
- 56: Anschluss
- 58: Anschluss
- 60: Leitung
- 62: Leitung
- 64: Druckausgang
- 66: Relaisventilanordnung
- 68: Leitung

## Patentansprüche

1. Bremsvorrichtung (1) für ein Schienenfahrzeug beinhaltend :
a) wenigstens einen Federspeicherzylinder (36) mit einem Druckanschluss (38),
b) wenigstens einen Betriebsbremszylinder (40) mit einem Druckanschluss (42), welcher mit einem Betriebsbremsdruck (C) beaufschlagbar ist;
c) eine Steuerventilanordnung (52) mit wenigstens drei Anschlüssen (54, 56, 58), wobei der erste, mit dem Druckanschluss (38) des Federspeicherzylinders (36) in Verbindung stehende Anschluss (54) mit dem zweiten, mit einem von einem Druckreservoir abgeleiteten Druck (R) beaufschlagbaren Anschluss (56) oder mit dem dritten Anschluß (58) verbindbar ist, **dadurch gekennzeichnet, dass**
d) der dritte Anschluss (58) der Steuerventilanordnung (52) mit dem Druckanschluss (42) des Betriebsbremszylinders (40) in Verbindung steht.

2. Bremsvorrichtung nach Anspruch 1, **dadurch gekennzeichnet, dass** die Steuerventilanordnung ein 3/2-Wegeventil (52) beinhaltet.

3. Bremsvorrichtung nach Anspruch 1 oder 2, **dadurch gekennzeichnet, dass** der Druckanschluss (42) des Betriebsbremszylinders (40) mit einem Druckausgang (64) einer Relaisventilanordnung (66) in Verbindung steht, welche in Abhängigkeit eines Steuerdrucks (Cv) aus einem von einem Druckreservoir abgeleiteten Reservoirdruck (Rc) den Betriebsbremsdruck (C) erzeugt.

4. Bremsvorrichtung nach wenigstens einem der vorhergehenden Ansprüche, **dadurch gekennzeichnet, dass** der Federspeicherzylinder (36) ein passiver Bremszylinder und der Betriebsbremszylinder (40) ein aktiver Bremszylinder ist oder dass der Federspeicherzylinder (36) ein aktiver Bremszylinder und der Betriebsbremszylinder (40) ein passiver Bremszylinder ist.

## Claims

1. Brake unit (1) for a rail vehicle, comprising:
(a) at least one spring-loaded cylinder (36) having one pressure port (38);
(b) at least one service brake cylinder (40) having one pressure port (42), which may be subjected to a service brake pressure (C);
(c) one control valve system (52) including at least three ports (54, 56, 58) whereof the first port (54) communicating with said pressure port (38) of said spring-loaded cylinder (36) is adapted to be connected to said second port adapted to be subjected to a pressure (R) derived from a pressure reservoir or to said third port (58), **characterised in that**
(d) said third port (58) of said control valve system (52) communicates with said pressure port (42) of said service brake cylinder (40).

2. Brake unit according to Claim 1, **characterised in that** said control valve system includes a 3/2-way valve (52).

3. Brake unit according to Claim 1 or 2, **characterised in that** said pressure port (42) of said service brake cylinder (40) communicates with a pressure outlet (64) of a relay valve system (66) that generates said service brake pressure (3) as a function of a control pressure (Cv) from a reservoir pressure (Rc) derived from a pressure reservoir.

4. Brake unit according to at least one of the preceding Claims, **characterised in that** said spring-loaded cylinder (36) is a passive brake cylinder and said service brake cylinder (40) is an active brake cylinder, or that said spring-loaded cylinder (36) is an active brake cylinder and said service brake (40) is a passive brake cylinder.

## Revendications

1. Dispositif (1) de freinage pour un véhicule sur rails comprenant :
a)au moins un cylindre (36) à ressort accumulateur ayant un raccord (38) de pression,
b) au moins un cylindre (40) de frein de service ayant un raccord (42) de pression, qui peut être alimenté en une pression (C) de frein de service,
c) un dispositif (52) de vanne de commande ayant au moins trois raccords (54, 56, 58), le premier raccord (54) communiquant avec le raccord (38) de pression du cylindre (36) de ressort accumulateur pouvant communiquer avec le deuxième raccord (56) pouvant être alimenté par une pression (R) dérivée d'un réservoir de pression ou avec le troisième raccord (58), **caractérisé en ce que**
d) le troisième raccord (58) du dispositif (52) de vanne de commande communique avec le raccord (42) de pression du cylindre (40) de frein de service.

2. Dispositif suivant la revendication 1,
**caractérisé en ce que** le dispositif de vanne de commande comporte une vanne (52) à 3/2 voies.

3. Dispositif suivant la revendication 1 ou 2,
**caractérisé en ce que** le raccord (42) de pression du cylindre (40) de frein de service communique avec une sortie (64) de pression d'un dispositif (66) de vanne relais, qui produit la pression (C ) de frein de service en fonction d'une pression (Cv) de commande à partir d'une pression (Rc) de réservoir dérivée d'un réservoir de pression.

4. Dispositif suivant au moins l'une des revendications précédentes,
**caractérisé en ce que** le cylindre (36) à ressort accumulateur est un cylindre de frein passif et le cylindre (40) de frein de service est un cylindre de frein actif ou **en ce que** le cylindre (36) à ressort accumulateur est un cylindre de frein actif et le cylindre (40) de frein de service est un cylindre de frein passif.
